# EUROPEAN PATENT APPLICATION

(11) **EP 4 697 709 A2**
(43) Date of publication of application: **18.02.2026**
(21) Application number: 25204776.6
(22) Date of filing: 25.09.2025
(51) Int. Cl.: H04N 19/167, H04N 19/174, H04N 19/176, H04N 19/467

(54) **IMAGE ENCODING METHOD, APPARATUS, STORAGE MEDIUM AND ELECTRONIC DEVICE**

(30) Priority: 26.06.2025 CN 202510872732
(71) Applicant: XG TECH PTE. LTD., Singapore 179098 (SG)
(72) Inventor: Chengliang, XU, 179098 Singapore (SG)
(74) Representative: Patentanwälte Magenbauer & Kollegen Partnerschaft mbB

(57) **Abstract**

A method includes: encoding an image to be encoded based on a pixel height of a watermark image and a vertical search range of an image encoder; acquiring a target image block from the image to be encoded based on information of a target region in which the watermark image is inserted into the image to be encoded; generating, based on the target image block and the watermark image, a watermark image to be encoded having a pixel height no more than a sum of the pixel heights of two slices; encoding the watermark image to be encoded to obtain a watermark slice data stream; and generating, based on the watermark slice data stream and the plurality of slice data streams in the first set mode, a plurality of slice data streams in a second set mode of the image to be encoded.

## Description

### FIELD OF THE PRESENT DISCLOSURE

The present disclosure relates to the technical field of intelligent assisted driving, in particular to an image encoding method, an apparatus, a storage medium and an electronic device.

### BACKGROUND OF THE PRESENT DISCLOSURE

The driving recording system of the cockpit-driving integrated system records images acquired by front-view/surround-view cameras outside a vehicle into a video stream during driving, and when receiving a relevant trigger event (such as an event triggering the demand for the intelligent driving shadow mode) encodes the images acquired by front-view/surround-view cameras outside the vehicle into a video stream and uploads it to the cloud. In the above two scenarios, watermark information is required for the video in the driving recording system, and the original image is the covered or superimposed with watermark information in a pattern form to record the timestamp, vehicle speed state, vehicle unique identification code, etc.; while image in the shadow mode requires no occlusion by watermark information. In related technologies, for the above two scenarios, it is necessary to perform encoding on the images twice acquired by the same camera, which brings a high load to the computing power of an image encoder.

### SUMMARY OF THE PRESENT DISCLOSURE

In embodiments of the present disclosure, there is provided an image encoding method and apparatus, a storage medium and an electronic device to solve the problem of high load on the image encoder caused by the need to perform encoding on images or videos for several times acquired by the same camera for different scenarios.

According to a first aspect of the embodiments of the present disclosure, an image encoding method is provided, the method including:
encoding an image to be encoded based on a pixel height of a watermark image and a vertical search range of an image encoder to obtain a plurality of slice data streams in a first set mode of the image to be encoded;
acquiring a target image block from the image to be encoded based on information of a target region in which the watermark image is inserted into the image to be encoded, wherein the target image block is an image block adjacent to the target region;
generating, based on the target image block and the watermark image, a watermark image to be encoded having a pixel height no more than a sum of the pixel heights of two slices;
encoding the watermark image to be encoded to obtain a watermark slice data stream; and
generating, based on the watermark slice data stream and the plurality of slice data streams in the first set mode, a plurality of slice data streams in a second set mode of the image to be encoded.

According to a second aspect of the embodiments of the present disclosure, there is provided an image encoding apparatus, including:
a first encoding module configured to encode an image to be encoded based on a pixel height of a watermark image and a vertical search range of an image encoder to obtain a plurality of slice data streams in a first set mode of the image to be encoded;
an image block acquiring module configured to acquire a target image block from the image to be encoded based on information of a target region in which the watermark image is inserted into the image to be encoded, wherein the target image block is an image block adjacent to the target region;
a splicing module configured to generate, based on the target image block and the watermark image, a watermark image to be encoded having a pixel height no more than a sum of the pixel heights of two slices;
a second encoding module configured to encode the watermark image to be encoded to obtain a watermark slice data stream; and
a generating module configured to generate, based on the watermark slice data stream and the plurality of slice data streams in the first set mode, a plurality of slice data streams in a second set mode of the image to be encoded.

According to a third aspect of the embodiments of the present disclosure, there is provided a computer-readable storage medium storing computer program instructions, which, when executed by a processor, cause the processor to implement the above image encoding method.

According to a fourth aspect of the embodiments of the present disclosure, there is provided an electronic device, including: a processor; a memory for storing executable instructions of the processor; wherein the processor is configured to read the executable instructions from the memory and execute the instructions to implement the above-mentioned image encoding method.

According to a fifth aspect of the embodiments of the present disclosure, there is provided computer program product, comprising computer program instructions, which, when executed by a processor, cause the processor to implement the above-mentioned image encoding method.

Based on the above-mentioned embodiments of the present disclosure, an image to be encoded may be encoded based on a pixel height of a watermark image and a vertical search range of an image encoder to obtain a plurality of slice data streams in a first set mode of the image to be encoded; a target image block may be acquired from the image to be encoded based on information of a target region in which the watermark image is inserted into the image to be encoded, wherein the target image block is an image block adjacent to the target region; a watermark image to be encoded having a pixel height no more than a sum of the pixel heights of two slices may be generated based on the target image block and the watermark image; the watermark image to be encoded may be encoded to obtain a watermark slice data stream; and a plurality of slice data streams in a second set mode of the image to be encoded may be generated based on the watermark slice data stream and the plurality of slice data streams in the first set mode. Thus, in the technical solution of the present disclosure, when performing slice encoding on the image in the first set mode based on the pixel height of the watermark image, it realizes that when encoding the image in the second set mode, the data stream of the image in the second set mode can be obtained without encoding the complete image, thereby reducing the computing power load of the image encoder.

Hereinafter, the technical solution of the present disclosure will be further described in detail from the following description taken in conjunction with the accompanying drawings.

### BRIEF DESCRIPTION OF THE DRAWINGS

FIG. 1 is a system architecture diagram to which the present disclosure is applied.
FIG. 2 is a schematic flowchart of an image encoding method according to an exemplary embodiment of the present disclosure.
FIG. 3 is a schematic diagram of slices in an image encoding method according to an exemplary embodiment of the present disclosure.
FIG. 4 is a schematic flowchart of step 201 in an image encoding method according to an exemplary embodiment of the present disclosure.
FIG. 5 is a schematic flowchart of image encoding when the image is in a second set mode according to an exemplary embodiment of the present disclosure.
FIG. 6 is a schematic flowchart of image encoding when the image is in the second set mode according to another exemplary embodiment of the present disclosure.
FIG. 7 is a schematic structural diagram of an image encoding apparatus according to an exemplary embodiment of the present disclosure.
FIG. 8 is a schematic structural diagram of an image encoding apparatus according to another exemplary embodiment of the present disclosure.
FIG. 9 is a structural diagram of an electronic device according to an exemplary embodiment of the present disclosure.

### DESCRIPTION OF THE EMBODIMENTS

To explain the present disclosure, exemplary embodiments of the present disclosure will be described in detail below with reference to the accompanying drawings. Obviously, the described embodiments are only a part of the embodiments of the present disclosure rather than all embodiments. It should be understood that the present disclosure is not limited by the exemplary embodiments.

It should be noted that: unless otherwise specifically stated, the relative arrangement of components and steps, numerical expressions and numerical values set forth in these embodiments do not limit the scope of the present disclosure.

### Overview of the Present Disclosure

In the process of implementing the present disclosure, the inventor(s) found through research that an Advanced Driving Assistance System (ADAS) domain in a cockpit-driving integrated system requires images to be free of watermark occlusion, so the acquired images can be directly encoded to obtain the encoded data stream of the original image; while an In-Vehicle Infotainment (IVI) domain requires images to have watermark information so as to record information such as timestamps, vehicle speed states, VIN codes, etc. Therefore, before encoding the image, it is necessary to superimpose the watermark information on the image and then encode it to obtain the encoded data stream of the watermarked image (the image obtained by embedding watermark information into the original image, which is also the image in video recording mode, herein referred to as watermarked image). Therefore, the cockpit-driving integrated system needs to use the image encoder to encode the image captured by the same image capture apparatus twice on different domains, which brings a high computing power load to the image encoder.

### Exemplary System

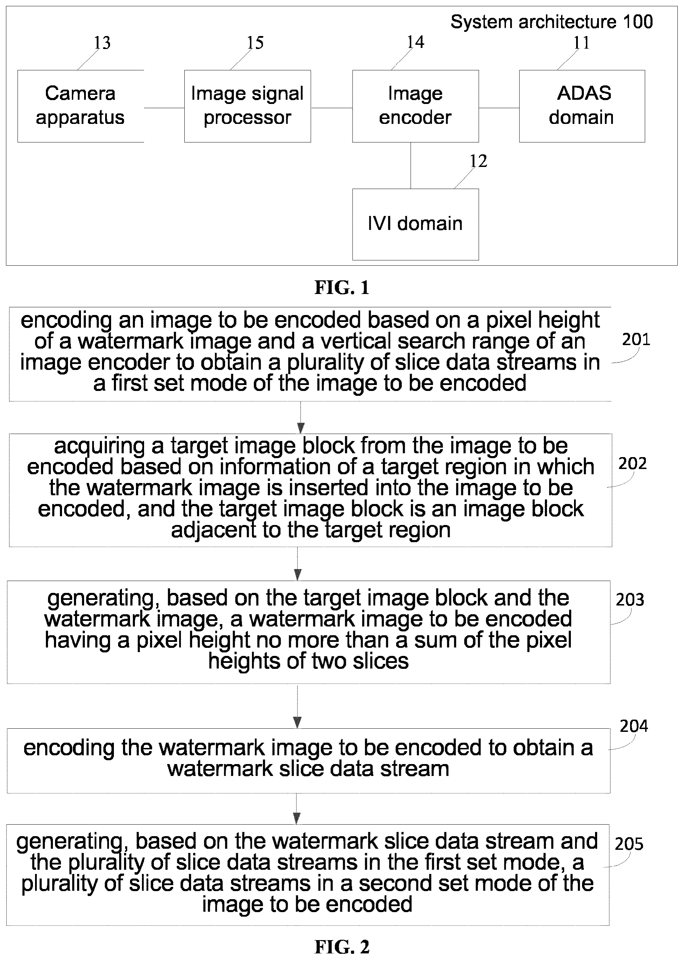

FIG. 1 shows an exemplary system architecture 100 of an image encoding method or an image encoding apparatus to which embodiments of the present disclosure can be applied.

As shown in FIG. 1, the system architecture 100 may include an ADAS domain 11, an IVI domain 12, a camera apparatus 13, an image encoder 14, and an image signal processor 15. During driving, the camera apparatus 13 captures images, then uses the image signal processor 15 to perform image preprocessing on the images to improve image quality; then uses the image encoder 14 to perform slice encoding on the captured original image to obtain a plurality of slice data streams corresponding to the original image (a plurality of slice data streams for a shadow mode of the ADAS domain 11). After generating the plurality of slice data streams corresponding to the original image, the watermark image can be spliced with the target image block in the original image based on the position where the watermark image (a strip image used to indicate carrying watermark information) is inserted into the original image to obtain a watermark image to be encoded (an image including watermark information and image blocks adjacent to the watermark information). The image encoder 14 performs slice encoding on the watermark image to be encoded to obtain a watermark slice data stream, and replaces a slice data stream of the region corresponding to the watermark image to be encoded in the plurality of slice data streams corresponding to the original image with the watermark slice data stream, so as to obtain a plurality of slice data streams of the watermarked image (a plurality of slice data streams for the video recording mode of the IVI domain 12). Since there is no need to encode the complete image when generating the plurality of slice data streams in the video recording mode, thereby reducing the computing power load of the image encoder.

It should be understood that the number of the camera apparatus 13, the image encoder 14, and the image signal processor 15 in FIG. 1 is merely illustrative. According to implementation requirements, any number of the camera apparatus 13, the image encoder 14, and the image signal processor 15 may be provided.

The camera apparatus 13 may be a camera apparatus installed on the vehicle for capturing surrounding environment images, and may include a front-view camera, a left-front-view camera, a right-front-view camera, a rear-view camera, a left-rear-view camera, a right-rear-view camera, etc. The number, installation position, and viewing angle range of the camera apparatus are not limited in the present disclosure.

### Exemplary Method

FIG. 2 is a schematic flowchart of a method for determining a distance of a target object relative to a vehicle according to an exemplary embodiment of the present disclosure. The present embodiment can be applied to an electronic device including the system architecture shown in FIG. 1 above, and as shown in FIG. 2, includes the following steps:

Step 201, encoding an image to be encoded based on a pixel height of a watermark image and a vertical search range of an image encoder to obtain a plurality of slice data streams in a first set mode of the image to be encoded.

In an embodiment of the present disclosure, a watermark image refers to identification information embedded in an image or video, for indicating that the image or video is authentic and valid. The watermark image may include information such as a timestamp of image capture, a vehicle speed state, a vehicle unique identification code, etc.

The pixel height h1 of the watermark image refers to the number of pixels of the watermark image in the vertical direction, and the image may typically have a pixel height such as 50 pixels, 60 pixels, etc. A vertical search range h2 of the image encoder is an encoding parameter of the image encoder, for indicating the maximum pixel offset in the vertical direction that can be considered when performing motion estimation in the image encoding process, for defining the range within which the image encoder searches for the best matching block in the vertical direction.

Exemplarily, if a vertical search range is 16 pixels, the image encoder may search a range of 16 pixels above and below each block of the current frame image to find the best matching block.

The first set mode is a mode in which the image does not require watermark occlusion, such as the shadow mode used in the ADAS domain. A slice data stream refers to a data stream generated by dividing an image to be encoded into a plurality of slices, and performing compression processing on each slice.

In an embodiment of the present disclosure, the image to be encoded may be encoded by means of slice encoding, where the slice pixel height is the sum of the pixel height of the watermark image and the vertical search range of the image encoder (h1+h2). For example, if the pixel height of the watermark image is 60 pixels and the vertical search range of the image encoder is 68 pixels, the slice pixel height is 128 pixels.

It can be understood that if the total pixel height of the image to be encoded may be divisible by the slice pixel height (h1+h2), the pixel height of each slice is the slice pixel height (h1+h2); if the total pixel height of the image to be encoded is not divisible by the slice pixel height, the pixel height of the bottommost slice is smaller than the slice pixel height.

Step 202, acquiring a target image block from the image to be encoded based on information of a target region in which the watermark image is inserted into the image to be encoded, and the target image block is an image block adjacent to the target region.

The information of a target region (hereinafter also referred to as "target region information") is used to indicate the image position where the watermark image is inserted into the image to be encoded, which may be the top region or the bottom region of the image to be encoded. The target image block is an image block adjacent to the target region. If the target region is the top region of the image, the target image block is an image region excluding the target region in the first slice of the image to be encoded; if the target region is the bottom region of the image, the image block used for splicing with the watermark image may be further determined according to the pixel height of the bottommost slice in the image to be encoded. If the slice pixel height of the bottommost slice in the image to be encoded is the same as that of other slices, the target image block is the image region excluding the target region in the bottommost slice of the image to be encoded; and if the slice pixel height of the bottommost slice in the image to be encoded is smaller than that of other slices, the target image block is the image region excluding the target region in the bottommost two slices of the image to be encoded.

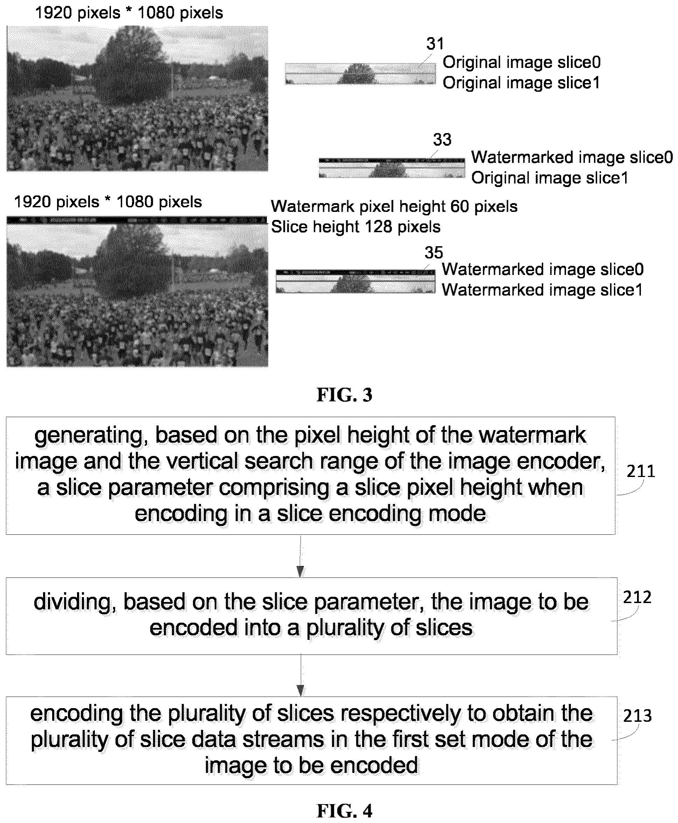

FIG. 3 illustrates a watermarked image and an original image. Exemplarily, referring to FIG. 3, the image size of both the original image and the watermarked image is 1920 pixels * 1080 pixels. The watermark image is a black bar at the top of the watermarked image with a pixel height of 60 pixels. The watermarked image is obtained by inserting the watermark image into the target region with a height of [0, 59] at the top of the original image. The region with a height of [0, 127] pixels indicated by reference numeral 31 is slice0 of the original image; the regions with a height of [0, 127] pixels indicated by reference numerals 33 and 35 are slice0 of the watermarked image. The slice0 of the watermarked image indicated by reference numeral 35 is obtained by splicing the watermark image and the target image block (image block with a height of [60,127] pixels) in the original image.

Step 203, generating, based on the target image block and the watermark image, a watermark image to be encoded having a pixel height no more than a sum of the pixel heights of two slices.

In an embodiment of the present disclosure, the watermark image to be encoded can be generated by splicing the target image block and the watermark image together in the vertical direction, aligning them to the same coordinate system, then fusing the aligned images to eliminate splicing gaps.

Depending on the different positions where the watermark image is inserted into the image to be encoded, the target image blocks correspondingly differ, but the pixel height of the watermark image to be encoded obtained by splicing does not exceed the sum of the pixel heights of two slices. When the position where the watermark image is inserted into the image to be encoded is a top region, the pixel height of the watermark image to be encoded is the pixel height of one slice; and when the position where the watermark image is inserted into the image to be encoded is a bottom region, the pixel height of the watermark image to be encoded is the pixel height of one slice, or greater than one slice but less than a sum of the pixel heights of two slices.

Exemplarily, the pixel height of the image to be encoded is 1080 pixels, the value of the slice pixel height is 128 pixels, and the pixel height of the watermark image is 60 pixels; when performing slice encoding on the image to be encoded, the image to be encoded can be divided into 9 slices with the slice height of the last slice being less than the value of one slice pixel height of 1080-8*128 = 56 pixels; the target image block is the image region adjacent to the target region in the bottommost two slices of the image, the target image block has a height of 1080-7*128-60 = 124 pixels; the pixel height of the watermark image to be encoded obtained by splicing the target image block and the watermark image (pixel height) is 124 + 60 = 184 pixels, which is less than the sum of the pixel heights of two slices, 128*2 = 256 pixels.

Step 204, encoding the watermark image to be encoded to obtain a watermark slice data stream.

In an embodiment of the present disclosure, when encoding the watermark image to be encoded, encoding can be performed in a slice encoding manner with the slice pixel height of the image to be encoded served as the slice pixel height.

Step 205, generating, based on the watermark slice data stream and the plurality of slice data streams in the first set mode, a plurality of slice data streams in a second set mode of the image to be encoded.

In an embodiment of the present disclosure, by encoding the image to be encoded in a slice encoding mode in step 201, a plurality of slice data streams in the first set mode are obtained; the watermark image to be encoded is encoded to obtain one or two watermark slice data streams, then the corresponding slice data stream in the plurality of slice data streams in the first set mode can be replaced with the watermark slice data stream to obtain a plurality of slice data streams in the second set mode.

Exemplarily, the image to be encoded is encoded in a slice encoding mode to obtain a plurality of slice data streams S0, S1, S2..., Sn in the first set mode; the watermark image is inserted into the top region of the image to be encoded, then the data stream S0' of the top slice of the watermarked image is different from the data stream S0 of the top slice of the original image (image to be encoded); by replacing S0 in the plurality of slice data streams S0, S1, S2..., Sn in the first set mode with S0', a plurality of slice data streams S0', S1, S2..., Sn in the second set mode can be obtained.

Based on the above-mentioned embodiments of the present disclosure, an image to be encoded may be encoded based on a pixel height of a watermark image and a vertical search range of an image encoder to obtain a plurality of slice data streams in a first set mode of the image to be encoded; a target image block may be acquired from the image to be encoded based on information of a target region in which the watermark image is inserted into the image to be encoded; a watermark image to be encoded having a pixel height no more than a sum of the pixel heights of two slices may be generated based on the target image block and the watermark image; the watermark image to be encoded may be encoded to obtain a watermark slice data stream; and a plurality of slice data streams in a second set mode of the image to be encoded may be generated based on the watermark slice data stream and the plurality of slice data streams in the first set mode. Thus, in the technical solution of the present disclosure, when performing slice encoding on the image in the first set mode based on the pixel height of the watermark image, it realizes that when encoding the image in the second set mode, the data stream of the image in the second set mode can be obtained without encoding the complete image, thereby reducing the computing power load of the image encoder.

In some optional embodiments, in response to receiving a trigger event for outputting a video in the first set mode, the plurality of slice data streams in the first set mode of respective images to be encoded in the video to be encoded are output; and in response to receiving a trigger event for outputting a video in the second set mode, the plurality of slice data streams in the second set mode for respective images to be encoded in the video to be encoded are output.

In the present embodiment, after acquiring the plurality of slice data streams in the first set mode and the plurality of slice data streams in the second set mode, the slice data streams can be stored in a memory, and when a trigger event for outputting the data stream is received, the slice data streams in the corresponding mode can be output.

FIG. 4 is a schematic flowchart of step 201 in an image encoding method according to an exemplary embodiment of the present disclosure. As shown in FIG. 4, step 201 may include the following steps:

Step 211, generating, based on the pixel height of the watermark image and the vertical search range of the image encoder, a slice parameter comprising a slice pixel height when encoding in a slice encoding mode.

The slice encoding mode refers to an encoding mode in which an image is divided into a plurality of smaller data blocks (slices), and each slice is independently encoded.

In the embodiment of the present disclosure, the sum of the pixel height of the watermark image and the vertical search range of the image encoder is determined as the slice pixel height. For example, if the pixel height of the watermark image is 60 pixels and the vertical search range of the image encoder is 68 pixels, the slice pixel height is 128 pixels.

Step 212, dividing, based on the slice parameter, the image to be encoded into a plurality of slices.

In the embodiment of the present disclosure, according to the slice pixel height, the image to be encoded can be divided into a plurality of strip-shaped slices from top to bottom. If the pixel height of the image to be encoded is divisible by the slice pixel height, the image to be encoded can be equally divided into a plurality of slices. If the pixel height of the image to be encoded cannot be divisible by the slice pixel height, the pixel height of the bottommost slice of the image is less than the determined slice pixel height.

Exemplarily, if the slice pixel height is 128 pixels and the pixel height of the image to be encoded is 1280 pixels, the image to be encoded can be divided into 10 slices, respectively being ten slices with heights of [0, 127] pixels, [128, 255] pixels, [256, 383] pixels, [384, 511] pixels, [512, 639] pixels, [640, 761] pixels, [768, 895] pixels, [896, 1023] pixels, [1024, 1151] pixels, and [1152, 1279] pixels; or, if the slice pixel height is 128 pixels and the pixel height of the image to be encoded is 1080 pixels, the image to be encoded can be divided into 9 slices, respectively being 9 slices with heights of [0, 127] pixels, [128, 255] pixels, [256, 383] pixels, [384, 511] pixels, [512, 639] pixels, [640, 761] pixels, [768, 895] pixels, [896, 1023] pixels, and [1024, 1079] pixels. The pixel height of the ninth slice is 1079-1024+1=56 pixels.

Step 213, encoding the plurality of slices respectively to obtain the plurality of slice data streams in the first set mode of the image to be encoded.

In the embodiment of the present disclosure, by encoding the plurality of slices respectively, a slice data stream corresponding to respective slices of the image to be encoded can be obtained, and the slice data stream can be named by a slice number and stored in the memory.

Based on the above embodiment of the present disclosure, slice parameter is generated based on the pixel height of the watermark image and the vertical search range of the image encoder; the image to be encoded are divided into a plurality of slices based on the slice parameter; and the plurality of slices are encoded respectively. Since the slice pixel height is a sum of the pixel height of the watermark image and the vertical search range of the image encoder, the problem that in-loop filtering generated when replacing slice data streams crosses slice boundaries and the problem of reference pixel mismatch caused by motion vectors crossing slice boundaries can be avoided; since the slice pixel height is a sum of the pixel height of the watermark image and the vertical search range of the image encoder, it is possible to avoid incorrect motion compensation caused by one end of the motion vector being in the watermark region.

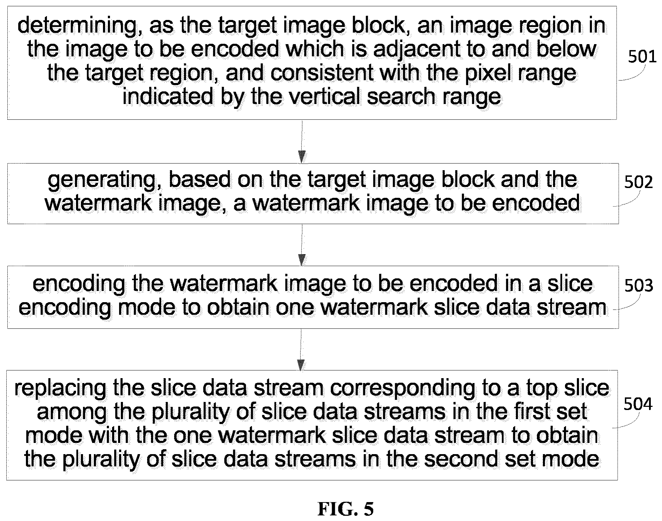

In some optional examples, when a trigger event for outputting a video in the second set mode is received, a plurality of slice data streams in the second set mode for respective images to be encoded in the video to be encoded may be output. FIG. 5 is a schematic flowchart of image encoding when the image is in a second set mode according to an exemplary embodiment of the present disclosure. The embodiment of the present disclosure takes the method of generating a plurality of slice data streams in the second set mode when the watermark image is located in the top region of the image to be encoded (i.e., the acquired original image) as an example for description, as shown in FIG. 5, including the following steps:
Step 501, determining, as the target image block, an image region in the image to be encoded which is adjacent to and below the target region, and consistent with the pixel range indicated by the vertical search range.

The target image block is an image block adjacent to the target region. If the target region is the top region of the image, the target image block is the image region in the first slice of the image to be encoded excluding the target region.

Referring again to FIG. 3, a reference numeral 31 is the first slice in the original image. In order to obtain the first slice of the watermarked image indicated by the reference numeral 33 according to the first slice in the original image indicated by the reference numeral 31, it is necessary to splice the watermark image with the image region in the original image that is adjacent to and below the target region, and consistent with the pixel range indicated by the vertical search range; the target region where the watermark image is located is a region with a height of [0, 59] pixels, and the target image block is a region with a height of [60, 127] pixels in the original image, and the pixel height range of the target image block is consistent with the vertical search range of 68 pixels.

Step 502, generating, based on the target image block and the watermark image, a watermark image to be encoded.

In an embodiment of the present disclosure, the watermark image to be encoded can be generated by splicing the target image block and the watermark image together in the vertical direction, aligning them to the same coordinate system, then fusing the aligned images to eliminate splicing gaps.

Step 503, encoding the watermark image to be encoded in a slice encoding mode to obtain one watermark slice data stream.

Since the watermark image is located in the top region, the target image block only needs to include the image region in the original image that is adjacent to and below the target region, and consistent with the pixel range indicated by the vertical search range; therefore, the spliced watermark image to be encoded includes only one slice, and when performing slice encoding, encoding is performed according to the aforementioned slice pixel height, resulting in only one watermark slice data stream S0'.

Step 504, replacing the slice data stream corresponding to a top slice among the plurality of slice data streams in the first set mode with the one watermark slice data stream to obtain the plurality of slice data streams in the second set mode.

The plurality of slice data streams in the first set mode are S0, S1, S2..., Sn; the watermark image is inserted into the top region of the image to be encoded; therefore, by replacing S0 in the plurality of slice data streams S0, S1, S2..., Sn in the first set mode with S0', the plurality of slice data streams S0', S1, S2..., Sn in the second set mode can be obtained.

Based on the aforementioned embodiments of the present disclosure, when the watermark image is located in the top region of the image, the watermark image to be encoded that needs to be encoded can be obtained by simply splicing the watermark image with the image region excluding the target region in the first slice of the original image; the watermark image to be encoded only includes a region of one slice size; therefore, when acquiring the slice data streams in the second set mode, only one slice needs to be encoded without encoding the complete watermarked image, and, which greatly reduces the computing power load of the image encoder.

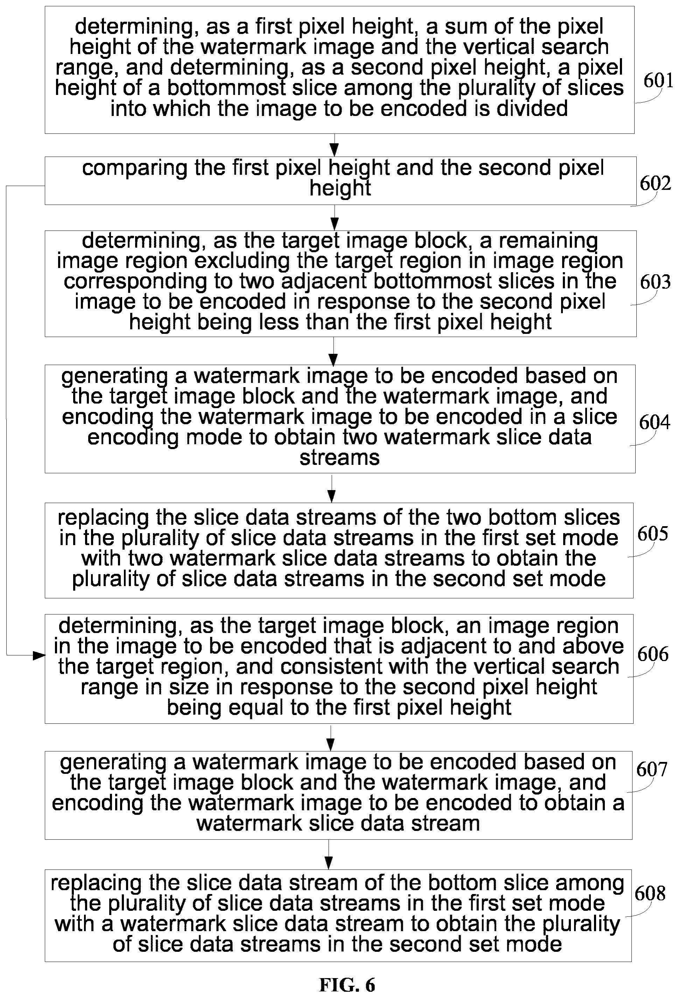

FIG. 6 is a schematic flowchart of image encoding when the image is in the second set mode according to another exemplary embodiment of the present disclosure. The embodiment of the present disclosure takes the method of generating a plurality of slice data streams in the second set mode when the watermark image is located in the bottom region of the image to be encoded (i.e., the acquired original image) as an example for description, as shown in FIG. 6, including the following steps:

Step 601, determining, as a first pixel height, a sum of the pixel height of the watermark image and the vertical search range, and determining, as a second pixel height, a pixel height of a bottommost slice among the plurality of slices into which the image to be encoded is divided.

Step 602, comparing the first pixel height and the second pixel height.

In the embodiment of the present disclosure, during slice encoding, the slice division is performed on the image to be encoded from top to bottom. For the case where the pixel height of the image to be encoded is divisible by the slice pixel height, the second pixel height is the same as the first pixel height; for the case where the pixel height of the image to be encoded is not divisible by the slice pixel height, the second pixel height is smaller than the first pixel height.

Further, when the second pixel height is smaller than the first pixel height, step 603 is performed to determine the target image block; when the second pixel height is the same as the first pixel height, step 606 is performed to determine the target image block.

Step 603, determining, as the target image block, a remaining image region excluding the target region in image region corresponding to two adjacent bottommost slices in the image to be encoded in response to the second pixel height being less than the first pixel height.

When the second pixel height is smaller than the first pixel height, the remaining image region excluding the target region in the corresponding image region may be determined as the target image block. That is, the image is divided into n slices. If the pixel height of the n-th slice is smaller than the slice pixel height of other slices, the remaining image region excluding the target region in the n^{th} and (n-1)^{th} slices may be determined as the target image block. By means of this implementation, the problem can be avoided that in-loop filtering generated when replacing the slice crosses the slice boundary and the problem of reference pixel mismatch caused by the motion vector crossing the slice boundary.

Exemplarily, if the slice pixel height is 128 pixels and the pixel height of the image to be encoded is 1080 pixels, the image to be encoded may be divided into 9 slices, and the pixel height of the 9^{th} slice is 56 pixels, which is smaller than 128 pixels. Therefore, the image region where the 8^{th} and 9^{th} slices are located, i.e., the image region of [896, 1019] pixels in the image region with a pixel height of [896, 1079] pixels excluding the target region [1020, 1079] where the watermark is located, may be determined as the target image block.

The in-loop filtering is mainly used to eliminate blocking artifacts generated during the video compression process. In image encoding, the image is divided into a plurality of slices for encoding, and obvious boundary artifacts may be generated between slices. In-loop filtering reduces artifacts by smoothing these boundaries and improves the visual quality of the video.

Step 604, generating a watermark image to be encoded based on the target image block and the watermark image, and encoding the watermark image to be encoded in a slice encoding mode to obtain two watermark slice data streams.

The watermark image to be encoded can be generated by splicing the target image block and the watermark image together in the vertical direction, aligning them to the same coordinate system, then fusing the aligned images to eliminate splicing gaps.

Since the pixel height of the watermark image to be encoded exceeds the slice pixel height of one slice, it will be divided into two slices for encoding during slice encoding, and two watermark slice data streams Sn-1' and Sn' are obtained correspondingly.

Step 605, replacing the slice data streams of the two bottom slices in the plurality of slice data streams in the first set mode with two watermark slice data streams to obtain the plurality of slice data streams in the second set mode.

The plurality of slice data streams in the first set mode are S0, S1, S2..., Sn; the watermark image is inserted into the bottom region of the image to be encoded, therefore, by replacing Sn-1 and Sn in the plurality of slice data streams S0, S1, S2..., Sn in the first set mode with Sn-1' and Sn', the plurality of slice data streams S0', S1, S2..., Sn-1', Sn' in the second set mode can be obtained.

Step 606, determining, as the target image block, an image region in the image to be encoded that is adjacent to and above the target region, and consistent with the vertical search range in size in response to the second pixel height being equal to the first pixel height.

The target image block is an image block adjacent to the target region. If the second pixel height is equal to the first pixel height, the target image block is the image region in the bottommost slice of the image to be encoded excluding the target region.

Step 607, generating a watermark image to be encoded based on the target image block and the watermark image, and encoding the watermark image to be encoded to obtain a watermark slice data stream.

In an embodiment of the present disclosure, the watermark image to be encoded can be generated by splicing the target image block and the watermark image together in the vertical direction, aligning them to the same coordinate system, then fusing the aligned images to eliminate splicing gaps.

Because the target image block include only the image region in the original image that is adjacent to and above the target region, and consistent with the pixel range indicated by the vertical search range, the spliced watermark image to be encoded includes only one slice, and when performing slice encoding, encoding is performed according to the aforementioned slice pixel height, resulting in only one watermark slice data stream Sn'.

Step 608, replacing the slice data stream of the bottom slice among the plurality of slice data streams in the first set mode with a watermark slice data stream to obtain the plurality of slice data streams in the second set mode.

The plurality of slice data streams in the first set mode are S0, S1, S2..., Sn; the watermark image is inserted into the bottom region of the image to be encoded; therefore, by replacing Sn in the plurality of slice data streams S0, S1, S2..., Sn in the first set mode with Sn', the plurality of slice data streams S0', S1, S2..., Sn' in the second set mode can be obtained.

Based on the above embodiments of the present disclosure, an image encoding method when the watermark image is located in the bottom region of the image is disclosed. The target image block for splicing the watermark image can be obtained according to the relationship between the image to be encoded and the slice encoding height, so as to obtain the watermark image to be encoded that needs to be encoded for further slice encoding. Since the pixel height of the watermark image to be encoded is less than the slice pixel height of two slices, there is no need to encode the complete watermarked image when obtaining the slice data streams in the second set mode, which greatly reduces the computing power load of the image encoder.

After obtaining a plurality of slice data streams in the second set mode and a plurality of slice data streams in the first set mode through the solution provided by the above embodiment, an effect evaluation is conducted on the watermarked image obtained by decoding the plurality of slice data streams in the second set mode and the original image obtained by decoding the slice data streams in the first set mode, and the evaluation result is as following: the Peak Signal-to-Noise Ratio (PSNR) of the YUV of the decoded watermarked image relative to the YUV of the original image in the [h1+h2, 2h1+2h2] region has no significant difference compared with the PSNR of the corresponding region of the original image in the first set mode relative to the YUV of the original image within the commonly used bit rate range. Therefore, the computing power load of the image encoder is reduced without affecting the image encoding effect in the technical solution of the present disclosure.

### Example apparatus

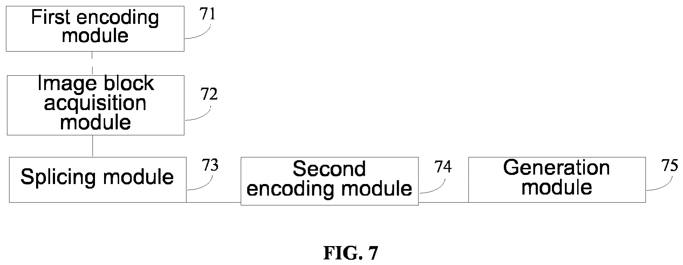

FIG. 7 is a schematic structural diagram of an image encoding apparatus according to an exemplary embodiment of the present disclosure. As shown in FIG. 7, the apparatus provided in the present embodiment may be applied to an electronic device, including:
a first encoding module 71 configured to encode an image to be encoded based on a pixel height of a watermark image and a vertical search range of an image encoder to obtain a plurality of slice data streams in a first set mode of the image to be encoded;
an image block acquisition module 72 configured to acquire a target image block from the image to be encoded based on information of a target region in which the watermark image is inserted into the image to be encoded, wherein the target image block is an image block adjacent to the target region;
a splicing module 73 configured to generate, based on the target image block and the watermark image, a watermark image to be encoded having a pixel height no more than a sum of the pixel heights of two slices;
a second encoding module 74 configured to encode the watermark image to be encoded to obtain a watermark slice data stream; and
a generating module 75 configured to generate a plurality of slice data streams in a second set mode of the image to be encoded based on the watermark slice data stream and the plurality of slice data streams in the first set mode.

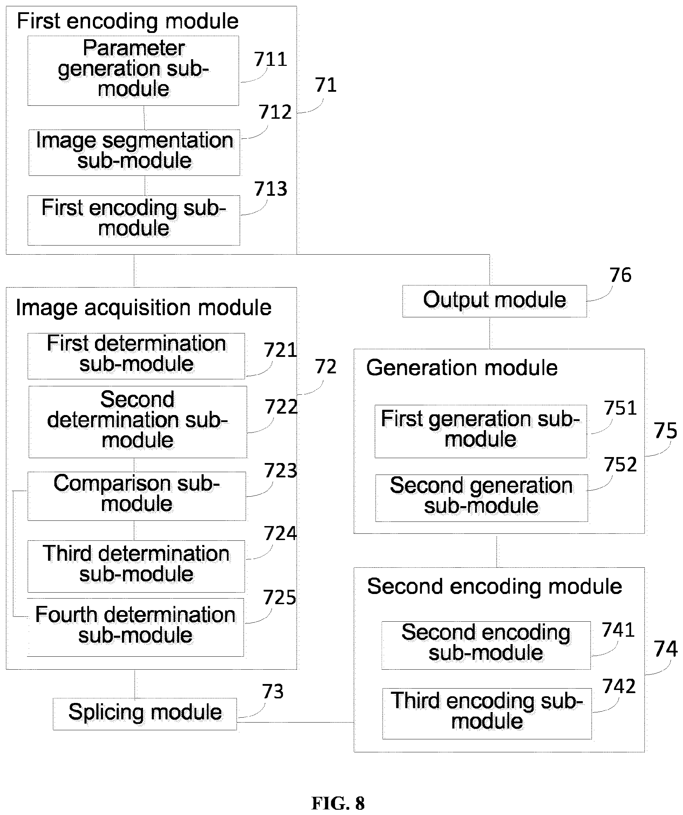

FIG. 8 is a schematic structural diagram of an image encoding apparatus according to another exemplary embodiment of the present disclosure. As shown in FIG. 8, on the basis of the embodiment shown in FIG. 7 above, in some implementations, the first encoding module 71 may include:
a parameter generation sub-module 711 configured to generate a slice parameter based on the pixel height of the watermark image and the vertical search range of the image encoder, where the slice parameter includes a slice pixel height when encoding in a slice encoding mode;
an image segmentation sub-module 712 configured to divide the image to be encoded into a plurality of slices based on the slice parameter;
a first encoding sub-module 713 configured to encode the plurality of slices respectively to obtain the plurality of slice data streams in the first set mode of the image to be encoded.
In some implementations, the target region is the top region of the image to be encoded;
the image acquisition module 72 may include:
a first determination sub-module 721 configured to determine as the target image block, an image region in the image to be encoded which is adjacent to and below the target region, and consistent with the pixel range indicated by the vertical search range.

In some implementations, the second encoding module 74 may be configured to encode the watermark image to be encoded in a slice encoding mode to obtain one watermark slice data stream.

In some implementations, the generation module 75 may be configured to replace the slice data stream corresponding to a top slice among the plurality of slice data streams in the first set mode with the one watermark slice data stream to obtain the plurality of slice data streams in the second set mode.

In some implementations, the target region is the bottommost region of the image to be encoded;
the image acquisition module 72 may include:
a second determination sub-module 722 configured to determine a sum of the pixel height of the watermark image and the vertical search range as a first pixel height, and determine a pixel height of a bottommost slice among the plurality of slices into which the image to be encoded is divided as a second pixel height;
a comparison sub-module 723 configured to compare the first pixel height and the second pixel height;
a third determination sub-module 724 configured to determine, as the target image block, a remaining image region excluding the target region in image region corresponding to two adjacent bottommost slices in the image to be encoded in response to the second pixel height being less than the first pixel height;
a fourth determination sub-module 725 configured to determine, as the target image block, an image region in the image to be encoded that is adjacent to and above the target region, and consistent with the vertical search range in size in response to the second pixel height being equal to the first pixel height.

In some embodiments, the second encoding module 74 may include:
a second encoding sub-module 741 configured to encode the watermark image to be encoded in a slice encoding mode to obtain two watermark slice data streams in response to the second pixel height being less than the first pixel height; and
a third encoding sub-module 742 configured to encode the watermark image to be encoded to obtain one watermark slice data stream in response to the second pixel height being equal to the first pixel height.

In some embodiments, the generation module 75 may include:
a first generation sub-module 751 configured to replace the slice data streams of two bottom slices in the plurality of slice data streams in the first set mode with the two watermark slice data streams to obtain the plurality of slice data streams in the second set mode in response to the second pixel height being less than the first pixel height; and
a second generation sub-module 752 configured to replace the slice data stream of one bottom slice among the plurality of slice data streams in the first set mode with the one watermark slice data stream to obtain the plurality of slice data streams in the second set mode in response to the second pixel height being equal to the first pixel height.

In some optional embodiments, further including an output module 76 configured to output the plurality of slice data streams in the first set mode of respective images to be encoded in the video to be encoded in response to receiving a trigger event for outputting a video in the first set mode; and output the plurality of slice data streams in the second set mode for respective images to be encoded in the video to be encoded in response to receiving a trigger event for outputting a video in the second set mode.

It should be noted that respective modules in this apparatus can be decomposed and/or recombined, and such decomposition and/or recombination shall be regarded as equivalent solutions of this apparatus.

The exemplary embodiment of this apparatus corresponds to the above exemplary method part, and relevant contents can mutually refer to and cite each other. Advantageous technical effects corresponding to example embodiments of the apparatus may be seen in the respective advantageous technical effects of "Exemplary Method" section described above and will not be described in detail here.

### Example electronic device

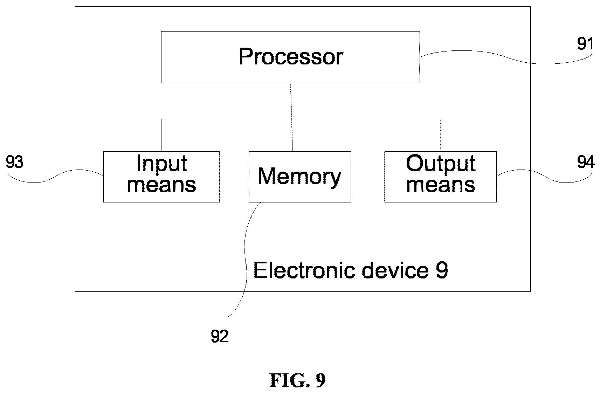

FIG. 9 is a structural diagram showing an electronic device according to an embodiment of the present application. As shown in FIG. 9, the electronic device 9 includes a plurality of processors 91 and memories 92.

The processor 91 may be a central processing unit (CPU) or other form of processing unit having data processing capabilities and/or instruction execution capabilities, and may control other components in the electronic device 9 to execute expected functions.

The memory 92 may include one or more computer program products, which may include various forms of computer-readable storage media, such as volatile memory and/or non-volatile memory. The volatile memory may for example include a random-access memory (RAM) and/or a cache memory (cache) etc. The non-volatile memory may include, for example, a read only memory (ROM), a hard disk, a flash memory, etc. One or more computer program instructions may be stored on a computer-readable storage medium, and the processor 91 may execute one or more computer program instructions to perform the image encoding methods and/or other expected functions of the various embodiments of the present disclosure above.

In one example, the electronic device 9 may further include: input means 93 and output means 94, which are interconnected by a bus system and/or other form of connection mechanism (not shown).

The input means 93 may further include, for example, a keyboard, a mouse, a touch screen, a sound pickup device (such as a microphone array), etc.

The output means 94 may output various information to the outside, which may include, for example, a display, a speaker, a printer, and a communication network and remote output devices connected thereto, etc..

Of course, for simplicity, only some of the components of the electronic device relevant to the present application are shown in FIG. 9, omitting components such as buses, input/output interfaces, etc. In addition, the electronic device may include any other suitable components depending on the particular application.

### Example computer program product and computer-readable storage medium

In embodiments of the present disclosure, in addition to the foregoing methods and devices, there may also be provided a computer program product, which includes computer program instructions which, when executed by a processor, cause the processor to perform the steps in the image encoding method according to various embodiments of the present disclosure described in the "Exemplary Method" section above of this specification.

The computer program product may be written in any combination of one or more programming languages to generate program code for performing the operations of the embodiments of the present disclosure. The programming languages include object-oriented programming languages such as Java, C++, and the like, and also include conventional procedural programming languages such as the "C" language or similar programming languages. The program code may be executed entirely on a user computing device, partially on a user device, as a standalone software package, partially on a user computing device and partially on a remote computing device, or entirely on a remote computing device or server.

In addition, in the embodiments of the present disclosure, there may be also provided a computer-readable storage medium having computer program instructions stored thereon, which, when executed by a processor, cause the processor to perform the steps in the image encoding methods according to various embodiments of the present disclosure described in the above "Exemplary Methods" section of this specification.

The computer-readable storage medium may employ any combination of one or more readable media. A readable medium may be a readable signal medium or a readable storage medium. For example, a readable storage medium may include, but is not limited to, electrical, magnetic, optical, electromagnetic, infrared, or semiconductor systems, apparatuses, or devices, or any combination thereof. More specific examples (a non-exhaustive list) of readable storage media include: electrical connections with one or more wires, portable disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination thereof.

The basic principles of the present disclosure have been described above in conjunction with specific embodiments; however, it should be noted that the advantages, benefits, effects, etc., mentioned in the present disclosure are merely examples and not limitations, and it should not be considered that these advantages, benefits, effects, etc., are indispensable to each embodiment of the present disclosure. In addition, the specific details disclosed above are for the purpose of illustration and ease of understanding, not for limitation, and the above details do not limit the present disclosure to being implemented by necessarily adopting the above-mentioned specific details.

The various embodiments in this specification are described in a progressive manner, and each embodiment focuses on explaining the differences from other embodiments; for the same or similar parts between the various embodiments, reference may be made to each other. As for system embodiments, since they basically correspond to method embodiments, their description is relatively simple, and reference may be made to the corresponding description in the method embodiments.

The block diagrams of devices, apparatuses, equipment, and systems involved in the present disclosure are merely illustrative examples and are not intended to require or imply that the devices, apparatuses, equipment, and systems must be connected, arranged, or configured in the manner shown in the block diagrams. As a person skilled in the art will recognize, these devices, apparatuses, equipment, and systems may be connected, arranged, or configured in any manner. Words such as "comprise", "include", and "have" are open-ended terms, which mean "including but not limited to" and are interchangeable therewith. The terms "or" and "and" as used herein refer to the term "and/or" and are interchangeable therewith, unless the context clearly indicates otherwise. The term "such as" as used herein refers to the phrase "such as but not limited to" and is interchangeable therewith.

The methods and apparatuses of the present disclosure may be implemented in many ways. For example, the methods and apparatuses of the present disclosure may be implemented by software, hardware, firmware, or any combination of software, hardware, and firmware. The above order of steps for the method is for illustration only, and the steps of the method of the present disclosure are not limited to the specifically described order above, unless specifically stated otherwise. Furthermore, in some embodiments, the present disclosure may also be implemented as programs recorded in a recording medium, which include machine-readable instructions for implementing the method according to the present disclosure. Thus, the present disclosure also covers a recording medium storing a program for executing the method according to the present disclosure.

It should also be noted that in the apparatus, devices and methods of the present disclosure, the components or steps may be decomposed and/or recombined. Such decomposition and/or recombination should be considered as equivalents of the present disclosure.

The previous description of the disclosed aspects is provided to enable any person skilled in the art to make or use the present disclosure. Various modifications to these aspects will be readily apparent to a person skilled in the art, and the generic principles defined herein may be applied to other aspects without departing from the scope of the disclosure. Thus, the present disclosure is not intended to be limited to the aspects shown herein but is to be accorded to the widest scope consistent with the principles and novel features disclosed herein.

The foregoing description has been presented for purposes of illustration and description. Furthermore, this description is not intended to limit the embodiments of the disclosure to the form disclosed herein. While a number of example aspects and embodiments have been discussed above, a person skilled in the art will recognize certain variations, modifications, variations, additions and sub-combinations thereof.

## Claims

1. An image encoding method, **characterized by** comprising:
encoding (201) an image to be encoded based on a pixel height of a watermark image and a vertical search range of an image encoder to obtain a plurality of slice data streams in a first set mode of the image to be encoded;
acquiring (202) a target image block from the image to be encoded based on information of a target region in which the watermark image is inserted into the image to be encoded, wherein the target image block is an image block adjacent to the target region;
generating (203), based on the target image block and the watermark image, a watermark image to be encoded having a pixel height no more than a sum of the pixel heights of two slices;
encoding (204) the watermark image to be encoded to obtain a watermark slice data stream; and
generating (205), based on the watermark slice data stream and the plurality of slice data streams in the first set mode, a plurality of slice data streams in a second set mode of the image to be encoded.

2. The method according to claim 1, wherein the encoding (201) an image to be encoded based on a pixel height of a watermark image and a vertical search range of an image encoder to obtain a plurality of slice data streams in a first set mode of the image to be encoded comprises:
generating (211), based on the pixel height of the watermark image and the vertical search range of the image encoder, a slice parameter comprising a slice pixel height when encoding in a slice encoding mode;
dividing (212), based on the slice parameter, the image to be encoded into a plurality of slices; and
encoding (213) the plurality of slices respectively, to obtain the plurality of slice data streams in the first set mode of the image to be encoded.

3. The method according to any one of claims 1 to 2, wherein the target region is a top region of the image to be encoded; and
wherein the acquiring (202) a target image block from the image to be encoded comprises:
determining (501), as the target image block, an image region in the image to be encoded which is adjacent to and below the target region, and consistent with the pixel range indicated by the vertical search range.

4. The method according to claim 3, wherein the encoding (204) the watermark image to be encoded to obtain a watermark slice data stream comprises:
encoding (503) the watermark image to be encoded in a slice encoding mode to obtain one watermark slice data stream.

5. The method according to claim 4, wherein the generating (205), based on the watermark slice data stream and the plurality of slice data streams in the first set mode, a plurality of slice data streams in a second set mode of the image to be encoded comprises:
replacing (504) a slice data stream corresponding to a top slice among the plurality of slice data streams in the first set mode with the one watermark slice data stream to obtain the plurality of slice data streams in the second set mode.

6. The method according to claim 2, wherein the target region is a bottommost region of the image to be encoded; and
wherein the acquiring (202) a target image block from the image to be encoded comprises:
determining (601), as a first pixel height, a sum of the pixel height of the watermark image and the vertical search range, and determining, as a second pixel height, a pixel height of a bottommost slice among the plurality of slices into which the image to be encoded is divided;
comparing (602) the first pixel height and the second pixel height; and
determining (603), as the target image block, a remaining image region excluding the target region in image region corresponding to two adjacent bottommost slices in the image to be encoded in response to the second pixel height being less than the first pixel height; or
determining (606), as the target image block, an image region in the image to be encoded that is adjacent to and above the target region, and consistent with the vertical search range in size in response to the second pixel height being equal to the first pixel height.

7. The method according to claim 6, wherein the encoding (204) the watermark image to be encoded to obtain a watermark slice data stream comprises:
encoding the watermark image to be encoded in a slice encoding mode to obtain two watermark slice data streams in response to the second pixel height being less than the first pixel height; or
encoding the watermark image to be encoded to obtain one watermark slice data stream in response to the second pixel height being equal to the first pixel height.

8. The method according to claim 7, wherein the generating (205), based on the watermark slice data stream and the plurality of slice data streams in the first set mode, a plurality of slice data streams in a second set mode of the image to be encoded comprises:
replacing (605) the slice data streams of two bottom slices in the plurality of slice data streams in the first set mode with the two watermark slice data streams to obtain the plurality of slice data streams in the second set mode in response to the second pixel height being less than the first pixel height; or
replacing (608) the slice data stream of one bottom slice among the plurality of slice data streams in the first set mode with the one watermark slice data stream to obtain the plurality of slice data streams in the second set mode in response to the second pixel height being equal to the first pixel height.

9. The method according to any one of claims 1 to 8, further comprising:
outputting the plurality of slice data streams in the first set mode of respective images to be encoded in the video to be encoded in response to receiving a trigger event for outputting a video in the first set mode; and
outputting the plurality of slice data streams in the second set mode for respective images to be encoded in the video to be encoded in response to receiving a trigger event for outputting a video in the second set mode.

10. An image encoding apparatus, **characterized by** comprising:
a first encoding module (71) configured to encode an image to be encoded based on a pixel height of a watermark image and a vertical search range of an image encoder to obtain a plurality of slice data streams in a first set mode of the image to be encoded;
an image block acquiring module (72) configured to acquire a target image block from the image to be encoded based on information of a target region in which the watermark image is inserted into the image to be encoded, wherein the target image block is an image block adjacent to the target region;
a splicing module (73) configured to generate, based on the target image block and the watermark image, a watermark image to be encoded having a pixel height no more than a sum of the pixel heights of two slices;
a second encoding module (74) configured to encode the watermark image to be encoded to obtain a watermark slice data stream; and
a generating module (75) configured to generate, based on the watermark slice data stream and the plurality of slice data streams in the first set mode, a plurality of slice data streams in a second set mode of the image to be encoded.

11. The apparatus according to claim 10, wherein the first encoding module (71) comprises:
a parameter generation sub-module (711) configured to generate, based on the pixel height of the watermark image and the vertical search range of the image encoder, a slice parameter comprising a slice pixel height when encoding in a slice encoding mode;
an image segmentation sub-module (712) configured to divide, based on the slice parameter, the image to be encoded into a plurality of slices; and
a first encoding sub-module (713) configured to encode the plurality of slices respectively, to obtain the plurality of slice data streams in the first set mode of the image to be encoded.

12. The apparatus according to any one of claims 10 to 11, wherein the target region is a top region of the image to be encoded; and
wherein the image acquisition module (72) comprises:
a first determination sub-module (721) configured to determine, as the target image block, an image region in the image to be encoded which is adjacent to and below the target region, and consistent with the pixel range indicated by the vertical search range.

13. A computer-readable storage medium, **characterized by** storing computer program instructions, which, when executed by a processor, cause the processor to implement the method according to any one of claims 1 to 9.

14. An electronic device, **characterized by** comprising:
a processor (91);
a memory (92) for storing executable instructions of the processor;
wherein the processor (91) is configured to read the executable instructions from the memory (92) and execute the instructions to implement the method according to any one of claims 1 to 9.

15. A computer program product, **characterized by** comprising computer program instructions, which, when executed by a processor, cause the processor to implement the method according to any one of claims 1 to 9.
